# DEMANDE DE BREVET EUROPEEN

(11) **EP 4 553 369 A1**
(43) Date de publication de la demande: **14.05.2025**
(21) Numéro de dépôt: 24199001.9
(22) Date de dépôt: 06.09.2024
(51) Int. Cl.: F17C 5/02

(54) **PROCÉDÉ POUR RÉDUIRE DES PERTES PAR ÉVAPORATION D'HYDROGÈNE**

(30) Priorité: 09.11.2023 FR 2312196
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: KOH, Kai Jun, 75007 Paris (FR); PETITPAS, Guillaume, 78350 Les Loges en Josas (FR); GIRARD, Claire, 78350 Les Loges en Josas (FR)
(74) Mandataire: Air Liquide

(57) **Abrégé**

L'invention a pour objet un procédé pour réduire des pertes d'hydrogène dans un réservoir (10) d'hydrogène liquide, ce réservoir étant remplissable et embarqué sur un véhicule (V), en étant pourvu d'un évent pour évacuer le dihydrogène gazeux en dehors du réservoir en cas de surpression, le procédé comportant les étapes :
- fournir des données de prochain remplissage du réservoir en fonction d'un prochain stationnement du véhicule prévu après le prochain remplissage, ces données fournissant au moins un niveau de remplissage cible à atteindre pour le prochain remplissage, ce niveau de remplissage cible étant déterminé de sorte qu'au début du stationnement du véhicule après un éventuel trajet du véhicule entre le remplissage au niveau de remplissage cible et le début du stationnement, le réservoir présente un niveau de remplissage de début de stationnement adapté pour que, pendant la durée de ce stationnement, la perte de dihydrogène via l'évent soit minimisée.

## Description

La présente invention concerne un procédé pour réduire des pertes par évaporation d'hydrogène dans un réservoir d'hydrogène liquide, ce réservoir étant remplissable et embarqué sur un véhicule.

Le stockage cryogénique de l'hydrogène dans un véhicule (voiture, camion, bateau, train, avion, etc...) offre une autonomie accrue pour les trajets du véhicule. Un inconvénient important lié à ce mode de stockage est l'évaporation de l'hydrogène (phénomène appelé « boil-off » en anglais), causée par le transfert de chaleur entre l'extérieur et l'hydrogène qui est stocké à des températures allant de 20 à 150 Kelvins. L'évaporation entraîne des pertes via l'évent, ce qui augmente l'empreinte carbone et en outre les coûts d'exploitation. Il existe un besoin crucial de réduire ces pertes.

La présente invention vise notamment à remédier à ce problème.

L'invention a ainsi pour objet un procédé pour réduire des pertes par évaporation d'hydrogène dans un réservoir d'hydrogène liquide, ce réservoir étant remplissable et embarqué sur un véhicule (terrestre, maritime, aérien ou spatial) pour alimenter par exemple une pile à combustible du véhicule, le réservoir étant pourvu d'un évent pour évacuer le dihydrogène gazeux en dehors du réservoir en cas de surpression, le procédé comportant les étapes suivantes :
- fournir des données de prochain remplissage du réservoir d'hydrogène liquide en fonction d'un prochain stationnement du véhicule prévu après le prochain remplissage, ces données de prochain remplissage fournissant au moins un niveau de remplissage cible (L-targ) à atteindre pour le prochain remplissage du réservoir, ce niveau de remplissage cible (L-targ) étant déterminé de sorte qu'au début du stationnement du véhicule après un éventuel trajet du véhicule entre le remplissage au niveau de remplissage cible (L-targ) et le début du stationnement, le réservoir présente un niveau de remplissage de début de stationnement (L-park) adapté pour que, pendant la durée de ce prochain stationnement du véhicule, la perte de dihydrogène via l'évent du réservoir soit minimisée.

L'invention permet avantageusement de guider, grâce aux données de prochain remplissage du réservoir, le conducteur/pilote du véhicule équipé du réservoir cryogénique d'hydrogène liquide afin d'optimiser la stratégie de ravitaillement et de minimiser les pertes liées à l'évaporation. L'invention est particulièrement avantageuse pour des applications à usage intensif, par exemple pour un camion utilisé toute la journée, entre phases de roulage et phases de stationnement.

Il est important que, lors des phases de stationnement du véhicule pendant lesquelles le phénomène d'évaporation de l'hydrogène peut se produire, le réservoir soit placé dans des conditions permettant de minimiser les pertes via l'évent. C'est ce que permet la présente invention.

Dans la présente invention, lors de la phase de stationnement (à savoir le véhicule est à l'arrêt avec moteur éteint), le réservoir d'hydrogène liquide cesse d'alimenter la pile à combustible. Une phase de stationnement est différente notamment d'un simple arrêt à un feu rouge ou d'un arrêt court à la station-service pour recharger le réservoir en hydrogène. Lors du stationnement au sens de l'invention, la pile à combustible est au repos.

Selon l'un des aspects de l'invention, la durée de stationnement est d'au moins une heure ou deux heures, voire davantage par exemple d'au moins 5 heures ou 8 heures.

On note que, lors du roulage du véhicule, le prélèvement d'hydrogène par la pile fait baisser la pression dans le réservoir. De plus, le phénomène thermodynamique de stratification (élaboration d'un gradient thermique dans la hauteur du réservoir) fait monter plus vite la pression dans un réservoir statique que dans un réservoir en mouvement. Ainsi, lors du roulage, le phénomène de « boil-off » se trouve être moins critique.

Dans l'invention, l'objectif est de déterminer le niveau de remplissage cible (L-targ) à atteindre pour le prochain remplissage du réservoir, pour qu'au moment du début de stationnement, le réservoir soit rempli au niveau de remplissage de début de stationnement (L-park). Dans les faits, l'utilisateur/ le conducteur n'a pas nécessairement besoin de connaître la valeur du niveau de remplissage de début de stationnement (L-park). L'utilisateur/ le conducteur a besoin de connaître le niveau de remplissage cible (L-targ) à atteindre pour le prochain remplissage du réservoir, puisqu'il va faire le remplissage en connaissant ce niveau cible. L'utilisateur/ le conducteur peut par exemple saisir la valeur de niveau (L-targ) sur la borne de recharge et cette borne fait automatiquement le remplissage jusqu'au niveau (L-targ). Ce niveau (L-targ) peut aussi être atteint manuellement par l'utilisateur. En variante, dans le cas où le remplissage se fait de manière totalement automatique, l'utilisateur/ le conducteur n'aurait pas besoin de connaître le niveau de remplissage cible (L-targ) à atteindre, et c'est la borne de recharge qui reçoit cette donnée pour faire le remplissage automatiquement.

Selon l'un des aspects de l'invention, le véhicule équipé du réservoir d'hydrogène liquide est un véhicule automobile routier tel qu'un camion notamment d'au moins 3.5 tonnes, ou un bus, notamment d'au moins 8 sièges.

Selon l'un des aspects de l'invention, le véhicule équipé du réservoir d'hydrogène liquide est un train ou un navire ou un avion.

Selon l'un des aspects de l'invention, le niveau de remplissage cible (L-targ) fourni par les données de prochain remplissage est corrélé à un moment (date/horaire) prévu pour le prochain remplissage.

Selon l'un des aspects de l'invention, les données de prochain remplissage sont déterminées au moins en fonction de la durée du prochain stationnement du véhicule.

Selon l'un des aspects de l'invention, la durée de stationnement est d'au moins une heure ou deux heures, voire davantage par exemple d'au moins 5 heures ou 8 heures.

Selon l'un des aspects de l'invention, les données de prochain remplissage sont déterminées au moins en fonction d'un paramètre de dormance qui représente le temps de latence avant que le réservoir ne subisse une ventilation (via l'évent) du fait de la pression dans le réservoir qui augmente au fur à mesure de l'évaporation de l'hydrogène.

Plus la valeur de ce paramètre de dormance est élevée, pour une situation donnée, plus l'on retarde le rejet d'hydrogène évaporé à l'extérieur du réservoir. Ceci est bénéfique car cela va dans le sens de réduire les pertes dues à l'évaporation.

Selon l'un des aspects de l'invention, la détermination des données de prochain remplissage utilise un modèle thermodynamique fournissant une relation entre le paramètre de dormance et le niveau de remplissage de début de stationnement (L-park), et éventuellement en relation également avec la pression à l'intérieur du réservoir.

Selon l'un des aspects de l'invention, le modèle thermodynamique se présente sous la forme d'un tableau de correspondance associant le pourcentage de remplissage du réservoir (ou niveau de remplissage de début de stationnement (L-park)) avec des valeurs du paramètre de dormance, et éventuellement encore la pression à l'intérieur du réservoir.

Le procédé selon l'invention permet, en fournissant une donnée de prochain remplissage pour un remplissage du réservoir à la station de ravitaillement, de s'assurer que, lors du prochain stationnement du véhicule, le niveau de remplissage cible (L-targ) du réservoir soit adapté à la durée de stationnement. L'évaporation d'hydrogène se produisant pendant cette phase de stationnement est minimisée grâce au modèle thermodynamique et à l'anticipation sur le trajet du véhicule, plus généralement du plan de route du véhicule.

Selon l'un des aspects de l'invention, la donnée de prochain remplissage est déterminée en fonction de deux modèles thermodynamiques différents, en utilisant l'un des modèles par exemple si la durée du prochain stationnement est inférieure à un seuil prédéterminé, et en utilisant l'autre des modèles si la durée du prochain stationnement du véhicule est supérieure à ce seuil prédéterminé.

L'un des modèles peut utiliser, comme décrit ci-dessus, le paramètre de dormance et l'autre des modèles thermodynamiques peut utiliser par exemple un paramètre de cumul d'hydrogène évaporé qui est ventilé à l'extérieur du réservoir.

Ainsi en fonction notamment de la durée du prochain stationnement du véhicule, la détermination des données de prochain remplissage peut être basée sur l'un ou l'autre des modèles en fonction de la durée du prochain stationnement.

Le paramètre de dormance est par exemple maximisé à une valeur de 50 % si l'hydrogène liquide est stocké dans le réservoir sous une pression de 10 bars.

Le modèle thermodynamique utilise par exemple un paramètre de cumul d'hydrogène évaporé qui est ventilé à l'extérieur du réservoir.

Selon l'un des aspects de l'invention, dans le cas où le prochain stationnement du véhicule doit durer N heures, la donnée de prochain remplissage est déterminée en prenant en compte cette durée de stationnement du véhicule.

Selon l'un des aspects de l'invention, la donnée de prochain remplissage prend en compte également la consommation d'hydrogène liquide lors d'un trajet du véhicule entre le moment où la donnée du prochain remplissage est fournie et le moment où le véhicule atteint une station de ravitaillement en hydrogène liquide.

Selon l'un des aspects de l'invention, la donnée de prochain remplissage prend également en compte un éventuel trajet que doit parcourir le véhicule entre la station de ravitaillement et l'endroit de stationnement du véhicule, par exemple un parking ou un garage.

Selon l'un des aspects de l'invention, les données de prochain remplissage sont déterminées également en fonction de données de trajet du véhicule et/ou de données d'environnement du véhicule, par exemple la température extérieure.

Selon l'un des aspects de l'invention, les données de prochain remplissage sont déterminées également en fonction de données relatives à un historique de trajets du véhicule.

Selon l'un des aspects de l'invention, les données de trajet du véhicule sont par exemple le kilométrage parcouru en moyenne par le véhicule lors d'une journée normale de trajet.

Selon l'un des aspects de l'invention, les données de trajet comportent en outre par exemple l'horaire habituel de parking du véhicule, par exemple à 19h après la journée de travail.

La durée de stationnement ou durée de parking peut être établie à 8 ou 12 heures par exemple lorsque le véhicule est stationné pendant la nuit.

Selon l'un des aspects de l'invention, les données de prochain remplissage sont déterminées en fonction de données saisies par l'utilisateur via une interface homme-machine. Ces données saisies concernent par exemple le trajet que l'utilisateur envisage d'accomplir, notamment les trajets juste avant et juste après le prochain remplissage.

L'invention concerne encore un système pour réduire des pertes par évaporation d'hydrogène (boil-off) dans un réservoir d'hydrogène liquide, ce réservoir étant remplissable et embarqué sur un véhicule (terrestre, maritime, aérien ou spatial) pour alimenter par exemple une pile à combustible du véhicule, le réservoir étant pourvu d'un évent pour évacuer le dihydrogène gazeux en dehors du réservoir en cas de surpression, le système étant configuré pour :
- fournir des données de prochain remplissage du réservoir d'hydrogène liquide en fonction d'un prochain stationnement du véhicule prévu après le prochain remplissage, ces données de prochain remplissage fournissant au moins un niveau de remplissage cible (L-targ) à atteindre pour le prochain remplissage du réservoir, ce niveau de remplissage cible (L-targ) étant déterminé de sorte qu'au début du stationnement du véhicule après un éventuel trajet du véhicule entre le remplissage au niveau de remplissage cible (L-targ) et le début du stationnement, le réservoir présente un niveau de remplissage de début de stationnement (L-park) adapté pour que, pendant la durée de ce prochain stationnement du véhicule, la perte de dihydrogène via l'évent du réservoir soit minimisée.

Selon l'un des aspects de l'invention, le système comporte une unité de traitement de données, notamment un ordinateur, configurée pour recevoir une donnée sur la durée du prochain stationnement du véhicule, et déterminer des données de niveau de remplissage cible (L-targ) du réservoir pour le prochain remplissage au moins en fonction de la durée du prochain stationnement du véhicule.

Selon l'un des aspects de l'invention, l'unité de traitement de données est configurée pour recevoir des données de trajet du véhicule et/ou de données d'environnement du véhicule, par exemple la température extérieure, et utiliser ces données dans la détermination des données de niveau de remplissage cible (L-targ) du réservoir pour le prochain remplissage.

Selon l'un des aspects de l'invention, l'unité de traitement de données est embarquée sur le véhicule (étant un ordinateur de bord du véhicule), et peut éventuellement communiquer avec un serveur distant.

L'unité de traitement de données embarquée sur le véhicule est reliée à un logiciel basé sur un serveur distant pour des opérations de calculs plus lourdes.

Selon l'un des aspects de l'invention, l'unité de traitement de données est distante (connectée à distance du véhicule).

En particulier, l'unité de traitement de données est une unité de calcul à distance qui contient en mémoire les cycles de conduite typiques.

Selon l'un des aspects de l'invention, le système comporte une interface homme-machine pour fournir au conducteur une information de niveau de remplissage cible (L-targ) du réservoir pour le prochain remplissage.

Selon l'un des aspects de l'invention, le système est configuré pour accomplir au moins certaines des étapes suivantes :
- traiter des données de capteurs tels que des jauges de niveau d'hydrogène liquide dans le réservoir ;
- traiter des données liées à un cycle de conduite ;
- récupérer un historique de trajet du véhicule ;
- communiquer avec une base de données concernant un réseau de ravitaillement en hydrogène liquide et le GPS ;
- calculer des données de prochain remplissage incluant notamment un prochain lieu de ravitaillement, un horaire, une information de niveau de remplissage cible (L-targ) du réservoir ;
- présenter ces données de prochain remplissage à l'utilisateur via une interface homme-machine.

Selon l'un des aspects de l'invention, au moins un capteur de pression et/ou un capteur de niveau est placé dans le réservoir d'hydrogène liquide.

D'autres caractéristiques, détails et avantages de l'invention ressortiront plus clairement à la lecture de la description qui suit d'une part, et de plusieurs exemples de réalisation donnés à titre indicatif et non limitatif en référence aux dessins schématiques annexés d'autre part, sur lesquels :
[Fig 1] La figure 1 est une représentation schématique d'un système pour réduire des pertes d'hydrogène selon l'invention ;
[Fig. 2] La figure 2 représente des courbes de dormance utilisées par le système de la figure 1 ;
[Fig. 3] La figure 3 représente des courbes de quantité d'hydrogène éventé ;
[Fig. 4] La figure 4 est un schéma bloc illustrant un procédé selon un exemple de réalisation de l'invention.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

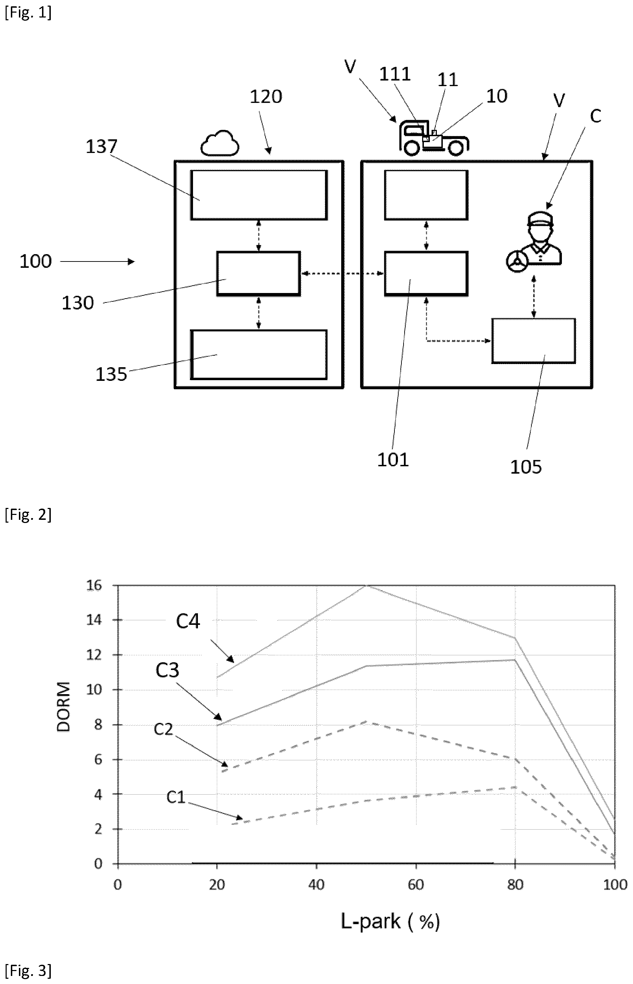

On a représenté, sur la figure 1, un système 100 pour réduire des pertes par évaporation d'hydrogène (ou « boil-off ») dans un réservoir 10 d'hydrogène liquide, ce réservoir 10 étant remplissable et embarqué sur un véhicule routier V, ici un camion, pour alimenter une pile à combustible (non représenté) du véhicule V.

Le réservoir 10 est pourvu d'un évent 11 pour évacuer le dihydrogène gazeux en dehors du réservoir 10 en cas de surpression.

Le système 100 est configuré pour fournir des données de prochain remplissage du réservoir 10 d'hydrogène liquide en fonction d'un prochain stationnement du véhicule prévu après le prochain remplissage, ces données de prochain remplissage fournissant au moins un niveau de remplissage cible (L-targ) à atteindre pour le prochain remplissage du réservoir 10, ce niveau de remplissage cible (L-targ) étant déterminé de sorte qu'au début du stationnement du véhicule V après un éventuel trajet du véhicule entre le remplissage au niveau de remplissage cible (L-targ) et le début du stationnement, le réservoir 10 présente un niveau de remplissage de début de stationnement (L-park) adapté pour que, pendant la durée D de ce prochain stationnement du véhicule, la perte de dihydrogène via l'évent du réservoir 10 soit minimisée. Ces aspects seront décrits en détail plus bas.

Le système 100 comporte une unité de traitement de données 101, telle qu'un ordinateur, configurée pour :
- recevoir une donnée sur la durée du prochain stationnement du véhicule, et déterminer des données de niveau de remplissage cible (L-targ) du réservoir 10 pour le prochain remplissage au moins en fonction de la durée du prochain stationnement du véhicule, et/ou
- recevoir des données de trajet du véhicule et/ou de données d'environnement du véhicule, par exemple la température extérieure, et utiliser ces données dans la détermination des données de niveau de remplissage cible (L-targ) du réservoir pour le prochain remplissage.

L'unité de traitement de données 101 est embarquée sur le véhicule V et peut communiquer avec un serveur distant 120, encore appelé « Cloud » en anglais.

L'unité de traitement de données 101 embarquée sur le véhicule V est reliée à un ordinateur 130 sur le serveur distant 120 pour des opérations de calculs plus lourdes.

Le serveur distant 120 contient dans une mémoire 135 des données sur des historiques des cycles de conduite et/ou de remplissage.

Ainsi les données de prochain remplissage sont déterminées, le cas échéant, en prenant en compte des données relatives à un historique de trajets du véhicule V.

Les données de trajet du véhicule V sont par exemple le kilométrage parcouru en moyenne par le véhicule lors d'une journée normale de trajet.

Les données de trajet comportent en outre par exemple l'horaire habituel de parking du véhicule, par exemple à 18h ou 19h après la journée de travail.

La durée de stationnement ou durée de parking peut être établie à 8, 10 ou 12 heures par exemple lorsque le véhicule est stationné pendant la nuit.

Les données de prochain remplissage peuvent également être déterminées en fonction de données saisies par l'utilisateur via une interface homme-machine 105. Ces données saisies concernent par exemple le trajet que l'utilisateur envisage d'accomplir, notamment les trajets juste avant et juste après le prochain remplissage.

L'interface homme-machine 105, par exemple un écran tactile à demeure sur le véhicule V ou un smartphone dans les mains du conducteur C, permet de fournir au conducteur une information de niveau de remplissage cible (L-targ) du réservoir pour le prochain remplissage.

Le serveur distant 120 contient dans une base de données 137 sur l'emplacement des stations de ravitaillement en hydrogène liquide, par exemple sous la forme d'une carte du réseau de stations de de ravitaillement en hydrogène liquide. Cette base de données 137 peut être mise à jour régulièrement.

Le système 100 est configuré pour accomplir les étapes suivantes :
- traiter des données de capteurs 111 tels que des jauges de niveau d'hydrogène liquide dans le réservoir 10;
- traiter des données liées à un cycle de conduite ;
- récupérer un historique de trajet du véhicule depuis la mémoire 135;
- communiquer avec la base de données 137 concernant un réseau de ravitaillement en hydrogène liquide et le GPS ;
- calculer des données de prochain remplissage incluant notamment un prochain lieu de ravitaillement, un horaire, une information de niveau de remplissage cible (L-targ) du réservoir ;
- présenter ces données de prochain remplissage à l'utilisateur via l'interface homme-machine 105.

Au moins un capteur de pression 111 et/ou un capteur de niveau d'hydrogène liquide 111 est placé dans le réservoir 10 d'hydrogène liquide.

Le système 100 permet de mettre en oeuvre un procédé pour réduire des pertes par évaporation d'hydrogène via l'évent 11 du réservoir 10, le procédé comportant les étapes suivantes :
- fournir des données de prochain remplissage du réservoir d'hydrogène liquide 10 en fonction d'un prochain stationnement du véhicule V prévu après le prochain remplissage, ces données de prochain remplissage fournissant au moins un niveau de remplissage cible (L-targ) à atteindre pour le prochain remplissage du réservoir, ce niveau de remplissage cible (L-targ) étant déterminé de sorte qu'au début du stationnement du véhicule après un éventuel trajet du véhicule entre le remplissage au niveau de remplissage cible (L-targ) et le début du stationnement, le réservoir présente un niveau de remplissage de début de stationnement (L-park) adapté pour que, pendant la durée de ce prochain stationnement du véhicule V, la perte de dihydrogène via l'évent du réservoir soit minimisée.

L'invention permet avantageusement de guider, grâce aux données de prochain remplissage du réservoir 10, le conducteur/pilote du véhicule équipé du réservoir cryogénique d'hydrogène liquide afin d'optimiser la stratégie de ravitaillement et de minimiser les pertes via l'évent 11. L'invention est particulièrement avantageuse pour des applications à usage intensif, par exemple pour un camion utilisé toute la journée, entre phases de roulage et phases de stationnement.

Il est important que, lors des phases de stationnement du véhicule pendant lesquelles le phénomène d'évaporation de l'hydrogène peut se produire, le réservoir soit placé dans des conditions permettant de minimiser les pertes via l'évent. C'est ce que permet la présente invention.

Dans la présente invention, lors de la phase de stationnement (à savoir le véhicule est à l'arrêt avec moteur éteint), le réservoir d'hydrogène liquide cesse d'alimenter la pile à combustible. Une phase de stationnement est différente notamment d'un simple arrêt à un feu rouge ou d'un arrêt court à la station-service pour recharger le réservoir en hydrogène. Lors du stationnement au sens de l'invention, la pile à combustible est au repos.

Selon l'un des aspects de l'invention, la durée de stationnement est d'au moins une heure ou deux heures, voire davantage par exemple d'au moins 5 heures ou 8 heures.

Dans l'invention, l'objectif est de déterminer le niveau de remplissage cible (L-targ) à atteindre pour le prochain remplissage du réservoir, pour qu'au moment du début de stationnement, le réservoir soit rempli au niveau de remplissage de début de stationnement (L-park). Dans les faits, l'utilisateur/ le conducteur n'a pas nécessairement besoin de connaître la valeur du niveau de remplissage de début de stationnement (L-park). L'utilisateur/ le conducteur a besoin de connaître le niveau de remplissage cible (L-targ) à atteindre pour le prochain remplissage du réservoir, puisqu'il va faire le remplissage en connaissant ce niveau cible. L'utilisateur/ le conducteur peut par exemple saisir la valeur de niveau (L-targ) sur la borne de recharge et cette borne fait automatiquement le remplissage jusqu'au niveau (L-targ). Ce niveau (L-targ) peut aussi être atteint manuellement par l'utilisateur. En variante, dans le cas où le remplissage se fait de manière totalement automatique, l'utilisateur/ le conducteur n'aurait pas besoin de connaître le niveau de remplissage cible (L-targ) à atteindre, et c'est la borne de recharge qui reçoit cette donnée pour faire le remplissage automatiquement.

De préférence, le niveau de remplissage cible (L-targ) fourni par les données de prochain remplissage est corrélé à un moment (date/horaire) prévu pour le prochain remplissage.

De préférence, les données de prochain remplissage sont déterminées au moins en fonction de la durée du prochain stationnement du véhicule.

De préférence, la durée de stationnement est d'au moins une heure ou deux heures, voire davantage par exemple d'au moins 5 heures ou 8 heures.

Dans l'exemple décrit, les données de prochain remplissage sont déterminées au moins en fonction d'un paramètre de dormance DORM qui représente le temps de latence avant que le réservoir ne subisse une ventilation (via l'évent 11) du fait de la pression dans le réservoir qui augmente au fur à mesure de l'évaporation de l'hydrogène.

Le paramètre de dormance DORM est ici pris avec, comme unité, le nombre de jours et l'hypothèse que les entrées thermiques du réservoir sont de 5 Watts.

On a représenté sur la figure 2 des courbes C1 à C4 avec, en abscisses, le niveau de remplissage du réservoir L-park (exprimé en pourcentage de remplissage du réservoir 10), et en ordonnées, le paramètre de dormance DORM (exprimé en nombre de jours).

Plus la valeur de ce paramètre de dormance DORM est élevée, pour une situation donnée, plus l'on retarde le rejet d'hydrogène évaporé à l'extérieur du réservoir. Ceci est bénéfique car cela va dans le sens de réduire les pertes via l'évent 11.

La courbe C1 correspond à une modélisation de la variation du paramètre de dormance DORM pour de l'hydrogène liquide LH2 à une pression entre 6 et 10 bars, excepté à la valeur de remplissage 100 % pour laquelle la pression est entre 8 et 10 bars.

La courbe C2 correspond à une modélisation de la variation du paramètre de dormance DORM pour de l'hydrogène liquide sous-refroidi sLH2 à une pression entre 6 et 20 bars, excepté à la valeur de remplissage 100 % pour laquelle la pression est entre 16 et 20 bars.

La courbe C3 correspond à une modélisation d'un cas hydrogène liquide LH2 pour une pression variant de 1 à 10 bars.

La courbe C4 correspond à une modélisation d'un cas hydrogène sLH2 pour une pression variant de 1 à 20 bars.

Par exemple, sur la courbe C1, on voit que le paramètre de dormance DORM est maximal pour un niveau de remplissage correspondant à 80%.

Sur la courbe C2, on voit que le paramètre de dormance DORM est maximal pour un niveau de remplissage correspondant à 50%.

On constate, de manière inattendue, qu'il n'est pas toujours souhaitable de remplir le réservoir à 100% si l'on veut réduire le risque de pertes d'hydrogène par l'évent.

La détermination des données de prochain remplissage utilise un modèle thermodynamique fournissant une relation entre le paramètre de dormance et le niveau de remplissage de début de stationnement (L-park), et éventuellement en relation également avec la pression à l'intérieur du réservoir.

Dans l'exemple décrit, le modèle thermodynamique se présente sous la forme d'un tableau de correspondance associant le pourcentage de remplissage du réservoir (ou niveau de remplissage de début de stationnement (L-park)) avec des valeurs du paramètre de dormance, et éventuellement encore la pression à l'intérieur du réservoir.

Le procédé selon l'invention permet, en fournissant une donnée de prochain remplissage pour un remplissage du réservoir à la station de ravitaillement, de s'assurer que, lors du prochain stationnement du véhicule, le niveau de remplissage cible (L-targ) du réservoir soit adapté à la durée de stationnement. L'évaporation d'hydrogène se produisant pendant cette phase de stationnement est minimisée grâce au modèle thermodynamique et à l'anticipation sur le trajet du véhicule, plus généralement du plan de route du véhicule V.

Dans un exemple de réalisation de l'invention, la donnée de prochain remplissage est déterminée en fonction de deux modèles thermodynamiques différents, en utilisant l'un des modèles par exemple si la durée du prochain stationnement est inférieure à un seuil prédéterminé, et en utilisant l'autre des modèles si la durée du prochain stationnement du véhicule est supérieure à ce seuil prédéterminé.

L'un des modèles peut utiliser, comme décrit ci-dessus, le paramètre de dormance et l'autre des modèles thermodynamiques peut utiliser par exemple un paramètre de cumul d'hydrogène évaporé qui est ventilé à l'extérieur du réservoir 10.

Ainsi en fonction notamment de la durée du prochain stationnement du véhicule, la détermination des données de prochain remplissage peut être basée sur l'un ou l'autre des modèles en fonction de la durée du prochain stationnement.

Un autre modèle thermodynamique est maintenant décrit.

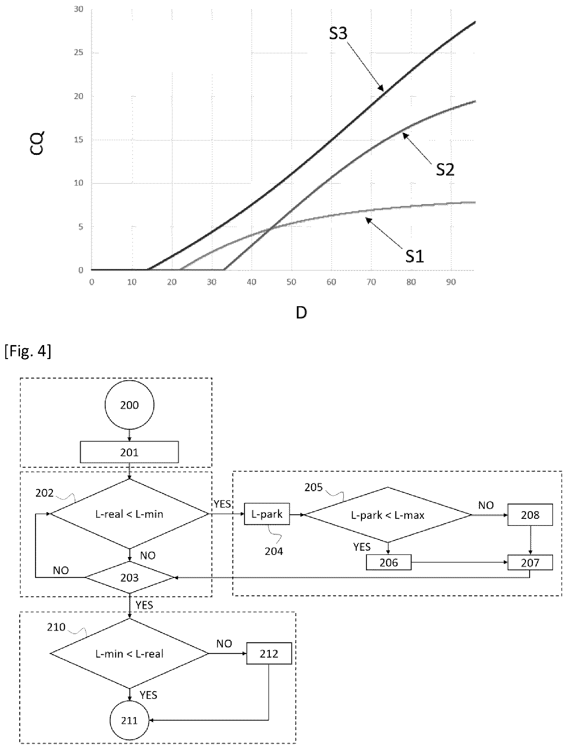

La figure 3 montre des courbes S1 à S3 avec, en abscisses, la durée D en heures depuis le début du stationnement, et avec en ordonnées, la quantité cumulée CQ d'hydrogène éventé via l'évent 11, exprimée en kg.

Les courbes S1 à S3 modélisent le comportement pour de l'hydrogène liquide sous refroidi (sLH2) avec une pression de travail maximale autorisée (encore désignée par MAWP) de 20 bars, avec l'hypothèse que la pression au début du stationnement à D = 0 est de 6 bars.

Ces courbes ont été obtenues pour une entrée thermique de 30 Watts.

La courbe S1 correspond à un niveau de remplissage du réservoir L-park de 20 % en début de stationnement (D=0).

La courbe S2 correspond à un niveau de remplissage du réservoir L-park de 50 % en début de stationnement (D=0).

La courbe S3 correspond à un niveau de remplissage du réservoir L-park de 80 % en début de stationnement (D=0).

On constate qu'au-delà par exemple de 45 heures de stationnement, un réservoir initialement rempli à 20 % (courbe S1) présente moins de pertes cumulées en hydrogène éventé que dans le cas où le réservoir serait rempli à 50 % en début du stationnement (courbe S2).

Ainsi en fonction de la durée de stationnement, il peut être plus judicieux de remplir le réservoir à un niveau moindre pour réduire les pertes par débit éventé.

D'autres paramètres peuvent être pris en compte.

Par exemple, dans le cas où le prochain stationnement du véhicule doit durer N heures, la donnée de prochain remplissage est déterminée en prenant en compte cette durée de stationnement du véhicule.

La donnée de prochain remplissage prend en compte également la consommation d'hydrogène liquide lors d'un trajet du véhicule entre le moment où la donnée du prochain remplissage est fournie et le moment où le véhicule atteint une station de ravitaillement en hydrogène liquide.

La donnée de prochain remplissage prend également en compte un éventuel trajet que doit parcourir le véhicule entre la station de ravitaillement et l'endroit de stationnement du véhicule, par exemple un parking ou un garage.

Les données de prochain remplissage sont déterminées également en fonction de données de trajet du véhicule et/ou de données d'environnement du véhicule, par exemple la température extérieure.

On va maintenant décrire, en référence à la figure 4, différentes étapes d'un procédé selon un exemple de mise en oeuvre de l'invention.

Dans ce procédé, on part d'un début (étape 200) d'un cycle journalier d'utilisation du véhicule V.

A ce début de cycle journalier, il est procédé (étape 201) au calcul d'une limite inférieure (L-min) et une limite supérieure (L-max) du niveau de remplissage du réservoir 10, limites préconisées pour la fin de journée, juste avant le début du stationnement. Il s'agit ici d'une initialisation.

Pendant le roulage du véhicule V dans la journée, le système 100 vérifie, en temps réel ou à intervalles de temps régulier, si le niveau de remplissage actuel (L-real) du réservoir 10 est plus petit que la limite inférieure (L-min), soit si L-real<L-min (étape 202).

Tant que le niveau de remplissage actuel L-real ne passe pas en dessous de la limite inférieure L-min, il est surveillé (étape 203) si un prochain stationnement débute.

Tant que le moment de commencer le stationnement n'est pas arrivé, on réitère l'étape 202.

Si le niveau actuel de remplissage L-real passe sous la limite inférieure L-min, alors il est déduit qu'un prochain remplissage du réservoir 10 est nécessaire.

A ce moment-là, à l'étape 204, le niveau de remplissage de début de stationnement L-park est calculé.

Puis à l'étape 205, il est déterminé si le niveau de remplissage de début de stationnement L-park est plus petit que la limite supérieure L-max.

Si L-park est plus petit que L-max, alors il est donné à L-targ la valeur de 100% (étape 206).

Puis intervient une étape 206 de remplissage du réservoir qui est rempli jusqu'à un niveau de 100%. Autrement dit, on fixe le niveau L-targ au niveau de 100%.

Dans le cas où à l'étape 205, il est déterminé que L-park est plus grand que L-max, alors on passe à l'étape 208 qui est de calculer un niveau de remplissage cible L-targ à atteindre pour le prochain remplissage.

Une fois cette étape 208 accomplie, il est procédé au remplissage du réservoir à l'étape 207.

À l'étape 203, si le moment de commencer le stationnement arrive, il est procédé à l'étape 210 dans laquelle est effectuée une comparaison entre le niveau de remplissage actuel L-real et la limite inférieure L-min.

Si le niveau de remplissage actuel L-real (qui correspond alors sensiblement à L-park) est plus grand que la limite inférieure L-min alors le stationnement peut effectivement commencer à l'étape 211.

En revanche, si le niveau actuel de remplissage L-real est plus petit que la limite inférieure de remplissage L-min alors il est émis la recommandation de remplir le réservoir 10 jusqu'au niveau de remplissage cible L-targ (étape 212).

Eventuellement on peut se garer avec un réservoir rempli à une valeur différente de L-targ, par exemple pour éviter de faire un remplissage avant la phase de parking si cela n'est pas nécessaire.

Les étapes décrites visent à maximiser le paramètre de dormance.

## Revendications

1. Procédé pour réduire des pertes par évaporation d'hydrogène dans un réservoir (10) d'hydrogène liquide, ce réservoir étant remplissable et embarqué sur un véhicule (V) pour alimenter par exemple une pile à combustible du véhicule, le réservoir (10) étant pourvu d'un évent pour évacuer le dihydrogène gazeux en dehors du réservoir en cas de surpression, le procédé comportant les étapes suivantes :
- fournir des données de prochain remplissage du réservoir d'hydrogène liquide en fonction d'un prochain stationnement du véhicule prévu après le prochain remplissage, ces données de prochain remplissage fournissant au moins un niveau de remplissage cible (L-targ) à atteindre pour le prochain remplissage du réservoir, ce niveau de remplissage cible (L-targ) étant déterminé de sorte qu'au début du stationnement du véhicule après un éventuel trajet du véhicule entre le remplissage au niveau de remplissage cible (L-targ) et le début du stationnement, le réservoir présente un niveau de remplissage de début de stationnement (L-park) adapté pour que, pendant la durée de ce prochain stationnement du véhicule, la perte de dihydrogène via l'évent du réservoir soit minimisée.

2. Procédé selon la revendication précédente, dans lequel les données de prochain remplissage sont déterminées au moins en fonction d'un paramètre de dormance (DORM) qui représente le temps de latence avant que le réservoir ne subisse une ventilation du fait de la pression dans le réservoir qui augmente au fur à mesure de l'évaporation de l'hydrogène.

3. Procédé selon la revendication précédente, dans lequel la détermination des données de prochain remplissage utilise un modèle thermodynamique fournissant une relation entre le paramètre de dormance et le niveau de remplissage de début de stationnement (L-park), et éventuellement en relation également avec la pression à l'intérieur du réservoir.

4. Procédé selon la revendication précédente, dans lequel le modèle thermodynamique se présente sous la forme d'un tableau de correspondance associant le pourcentage de remplissage du réservoir, ou niveau de remplissage de début de stationnement (L-park), avec des valeurs du paramètre de dormance, et éventuellement encore la pression à l'intérieur du réservoir.

5. Procédé selon l'une des revendications précédentes, dans lequel la donnée de prochain remplissage est déterminée en fonction de deux modèles thermodynamiques différents, en utilisant l'un des modèles par exemple si la durée du prochain stationnement est inférieure à un seuil prédéterminé, et en utilisant l'autre des modèles si la durée du prochain stationnement du véhicule est supérieure à ce seuil prédéterminé.

6. Procédé selon l'une des revendications précédentes, dans lequel la donnée de prochain remplissage prend en compte également la consommation d'hydrogène liquide lors d'un trajet du véhicule entre le moment où la donnée du prochain remplissage est fournie et le moment où le véhicule atteint une station de ravitaillement en hydrogène liquide.

7. Procédé selon l'une des revendications précédentes, dans lequel les données de prochain remplissage sont déterminées également en fonction de données relatives à un historique de trajets du véhicule.

8. Procédé selon l'une des revendications précédentes, dans lequel les données de prochain remplissage sont déterminées en fonction de données saisies par l'utilisateur via une interface homme-machine. Ces données saisies concernent par exemple le trajet que l'utilisateur envisage d'accomplir, notamment les trajets juste avant et juste après le prochain remplissage.

9. Système (100) pour réduire des pertes par évaporation d'hydrogène dans un réservoir (10) d'hydrogène liquide, ce réservoir (10) étant remplissable et embarqué sur un véhicule pour alimenter par exemple une pile à combustible du véhicule, le réservoir étant pourvu d'un évent pour évacuer le dihydrogène gazeux en dehors du réservoir en cas de surpression, le système (100) étant configuré pour :
- fournir des données de prochain remplissage du réservoir d'hydrogène liquide en fonction d'un prochain stationnement du véhicule prévu après le prochain remplissage, ces données de prochain remplissage fournissant au moins un niveau de remplissage cible (L-targ) à atteindre pour le prochain remplissage du réservoir, ce niveau de remplissage cible (L-targ) étant déterminé de sorte qu'au début du stationnement du véhicule (V) après un éventuel trajet du véhicule entre le remplissage au niveau de remplissage cible (L-targ) et le début du stationnement, le réservoir présente un niveau de remplissage de début de stationnement (L-park) adapté pour que, pendant la durée de ce prochain stationnement du véhicule, la perte de dihydrogène via l'évent du réservoir soit minimisée.

10. Système (100) selon la revendication précédente, dans lequel le système comporte une unité de traitement de données (101), notamment un ordinateur, configurée pour recevoir une donnée sur la durée du prochain stationnement du véhicule, et déterminer des données de niveau de remplissage cible (L-targ) du réservoir pour le prochain remplissage au moins en fonction de la durée du prochain stationnement du véhicule.

11. Système (100) selon la revendication précédente, dans lequel l'unité de traitement de données (101) est configurée pour recevoir des données de trajet du véhicule (V) et/ou de données d'environnement du véhicule, par exemple la température extérieure, et utiliser ces données dans la détermination des données de niveau de remplissage cible (L-targ) du réservoir pour le prochain remplissage.

12. Système (100) selon l'une des revendications 9 à 11, dans lequel le système est configuré pour accomplir au moins certaines des étapes suivantes :
- traiter des données de capteurs (111) tels que des jauges de niveau d'hydrogène liquide dans le réservoir ;
- traiter des données liées à un cycle de conduite ;
- récupérer un historique de trajet du véhicule (V) ;
- communiquer avec une base de données concernant un réseau de ravitaillement en hydrogène liquide et le GPS ;
- calculer des données de prochain remplissage incluant notamment un prochain lieu de ravitaillement, un horaire, une information de niveau de remplissage cible (L-targ) du réservoir ;
- présenter ces données de prochain remplissage à l'utilisateur via une interface homme-machine (105).
